Europäisches Patentamt

European Patent Office

Office européen des brevets

(19)

(11) **EP 0 942 162 B1**

(12) **FASCICULE DE BREVET EUROPEEN**

(45) Date de publication et mention
de la délivrance du brevet:
**04.08.2004 Bulletin 2004/32**

(51) Int Cl.⁷: **F02D 41/14**, F02D 19/02

(21) Numéro de dépôt: **99400477.8**

(22) Date de dépôt: **26.02.1999**

(54) **Procédé de contrôle de l'injection dans un moteur à combustion interne et allumage commandé, alimenté par du carburant gazeux liquéfié ou par un carburant gazeux sous des conditions soniques**

Verfahren zur Steuerung des Einspritzsystems einer Gasbrennkraftmaschine

Method of controling injection in a gas engine, the gas being liquid or gaseous

(84) Etats contractants désignés:
**DE ES GB IT NL**

(30) Priorité: **11.03.1998 FR 9802986**

(43) Date de publication de la demande:
**15.09.1999 Bulletin 1999/37**

(73) Titulaire: **Renault s.a.s.**
**92100 Boulogne Billancourt (FR)**

(72) Inventeurs:
• **Blanchard, Eric**
**92380 Garches (FR)**
• **Simon, Edouard**
**75007 Paris (FR)**

(74) Mandataire: **Rougemont, Bernard**
**Renault s.a.s**
**Dépt. Propriété Intellectuelle**
**Département 00267**
**TCR GRA 1 55**
**1 avenue du Golf**
**78288 Guyancourt Cedex (FR)**

(56) Documents cités:
WO-A-94/13946          FR-A- 2 709 151
US-A- 4 155 332          US-A- 4 543 153
US-A- 5 203 305          US-A- 5 474 054

**Description**

L'invention concerne le contrôle de l'injection dans un moteur à combustion interne et allumage commandé, alimenté par du carburant gazeux liquifié, par exemple du gaz de pétrole liquéfié (GPL) ou par un carburant gazeux sous des conditions soniques, par exemple du gaz naturel.

US 5 203 305 A décrit une méthode pour permettre à des moteurs standard de fonctionner avec des carburants de substitution. Dans ce cas la durée d'injection est corrigée en fonction de la température.

WO 94/13946 décrit une unité de commande moteur. Le retard à l'injection est fonction de la pression en amont des injecteurs et de la tension d'alimentation des injecteurs.

Tel que revendiqué on détermine la durée d'injection par la somme d'un premier terme de durée dépendant de la tension d'alimentation électrique des injecteurs et au moins de la pression du carburant en amont des injecteurs, et d'un deuxième terme de durée égal au produit d'un coefficient correctif par le débit d'air aspiré par le moteur en un cycle moteur, ce coefficient correctif dépendant au moins de la pression du carburant en amont des injecteurs.

Selon une caractéristique générale de l'invention, lorsque le moteur est alimenté par du carburant gazeux liquéfié, le premier terme de durée est égal à la somme d'un terme principal dépendant de la tension d'alimentation électrique des injecteurs et d'un terme auxiliaire correctif dépendant de la tension d'alimentation électrique des injecteurs et de la différence de pression du carburant entre l'amont et le nez des injecteurs. Par ailleurs, le coefficient correctif est proportionnel à ladite différence de pression de carburant entre l'amont et le nez des injecteurs.

Dans cette variante, on détermine avantageusement la pression au nez d'un injecteur à partir d'une part de la pression en amont des injecteurs mesurée à l'aide d'un capteur disposé dans le collecteur d'admission et, d'autre part, de la durée séparant l'instant de la mesure de cette pression amont et l'instant de fermeture de la soupape d'admission.

Selon une autre caractéristique générale de l'invention telle que revendiquée, prévoyant une alimentation du moteur par du carburant gazeux sous des conditions soniques, le premier terme de durée est égal à la somme d'un terme principal dépendant de la tension d'alimentation électrique des injecteurs et d'un terme auxiliaire correctif dépendant de la tension d'alimentation électrique des injecteurs et de la pression du carburant en amont des injecteurs. Par ailleurs, le coefficient correctif est proportionnel au rapport entre ladite pression du carburant en amont des injecteurs et la racine carrée de la température du collecteur d'admission en amont des injecteurs.

D'autres avantages et caractéristiques de l'invention apparaîtront à l'examen de la description détaillée qui suit, et relative à deux modes de mise en oeuvre de l'invention, nullement limitatifs.

L'invention s'applique pour un système d'injection mono ou multipoints, pour du carburant gazeux liquifié ou pour du carburant gazeux sous des conditions soniques, que ce soit en injection directe ou indirecte.

Le carburant soit à l'état liquide ou gazeux alimente une rampe d'injection (collecteur d'admission) équipée d'un capteur de pression de carburant ou d'un capteur de pression et d'un capteur de température. Cette rampe d'injection alimente un ou plusieurs injecteurs électromagnétiques dont le temps de commande, dit temps d'injection Tinj, est piloté par un calculateur.

D'une façon classique, et notamment dans le cas d'une injection essence classique, le temps d'injection Tinj est donné par la formule (I)

$$Tinj = Tm + K.Q \qquad (I)$$

Dans cette formule (I), Q représente le débit d'air aspiré par le moteur en un cycle moteur et Tm représente le retard à l'injection effectif de carburant après l'instant d'excitation de l'injecteur, c'est-à-dire la différence entre le temps d'ouverture de l'injecteur (temps pendant lequel l'injecteur est alimenté mais ne débite pas) et le temps de fermeture (temps pendant lequel l'injecteur débite alors qu'il n'est plus alimenté).

1. <u>Détermination du terme Tm</u>

Alors que d'une façon classique, et notamment dans un contrôle d'injection essence, le terme Tm ne dépend que de la tension d'alimentation des injecteurs (c'est-à-dire la tension de la batterie) et est notamment obtenu par une interpolation dans une table mémorisée dans une mémoire associée au calculateur de contrôle, l'invention prévoit de définir ce terme Tm comme la somme d'un terme principal Tms qui est le terme classique ne dépendant que de la tension d'alimentation électrique des injecteurs, et d'un terme auxiliaire correctif Tmc dépendant non seulement de la tension d'alimentation électrique des injecteurs mais également au moins de la pression du carburant en amont des injecteurs.

Plus précisément, ce terme auxiliaire correctif Tmc est égal à une fonction f. (DP, BAT) où BAT représente la tension batterie représentative de la tension d'alimentation électrique des injecteurs et DP représente un terme de pression.

D'un point de vue pratique, certaines valeurs de ce terme Tmc sont déterminées par des essais. Plus précisément, on mesure le débit massique en sortie d'un injecteur pour des conditions nominales et on fait varier ensuite le terme DP selon un pas d'incrémentation prédéterminé et l'on détermine, pour une tension BAT donnée, la valeur du terme Tmc permettant de conserver la même valeur de débit massique. On procède de la même façon on faisant varier la tension BAT d'un pas d'incrémentation prédéterminé. On détermine à chaque valeur de la tension BAT, et pour une valeur DP donnée, la valeur du terme Tmc nécessaire pour obtenir ledit débit massique.

Cette table de valeurs est ensuite mémorisée et les valeurs intermédiaires du terme Tmc sont obtenues par exemple par une double interpolation linéaire.

Lorsque le moteur est alimenté par un carburant gazeux sous des conditions soniques, c'est-à-dire lorsque le rapport entre la pression en amont des injecteurs et la pression en aval des injecteurs est supérieur à 2, il a été observé que la variable DP était alors simplement égale à la pression du carburant mesurée en amont des injecteurs.

Par contre, lorsque le moteur est alimenté par du carburant gazeux liquéfié, la variable DP est alors égale à la différence entre la pression du carburant en amont des injecteurs et la pression du carburant au nez des injecteurs.

La pression en amont des injecteurs est mesurée par un capteur disposé dans le collecteur d'admission.

Une façon de déterminer la pression au nez d'un injecteur consiste à calculer cette pression à partir de la pression amont mesurée et de la durée séparant l'instant de la mesure de cette pression amont et l'instant de fermeture de la soupape d'admissison. Une telle détermination est classique et parfaitement connue de l'homme du métier notamment par la demande de brevet français n° 93 10137. On rappelle ici brièvement les étapes essentielles de cette détermination de la pression au nez des injecteurs, l'homme du métier pouvant se référer à la demande de brevet français précitée pour plus de détails.

Ainsi, on calcule à chaque point mort haut d'indice i, la valeur estimée EPcoll(i) de la pression collecteur à la fermeture de la soupape d'admission qui représente en fait la pression au nez d'un injecteur, comme la somme entre la pression collecteur mesurée Pcoll(i) fournie par le capteur de pression et un incrément DPcoll(i) représentatif de l'évolution de la pression collecteur dans le temps :

$$(1) \qquad EPcoll(i) = Pcoll(i) + DPcoll(i)$$

L'incrément DPcoll(i) est défini par la formule :

$$(2) \qquad DPcoll(i) = Dell(i) * dPcoll(i)$$

dPcoll(i) représente la dérivée par rapport au temps de la pression collecteur entre deux points morts hauts, et Dell la période séparant l'instant d'acquisition de la valeur Pcoll(i) et l'instant de fermeture de la soupape d'admission. La formule (2) consiste donc à approximer la courbe d'évolution de la pression entre les instants considérés, par une tangente à la courbe.

La période Dell (i), exprimée par conséquent en nombre de points morts hauts, comprend essentiellement le délai d'acquisition de la mesure de la pression (temps de réponse du capteur et du système électronique de contrôle moteur) et le délai séparant l'instant de calcul du temps d'injection de l'instant de fermeture de la soupape d'admission. Cette période est pour un capteur de pression donné et un système électronique de contrôle moteur donné, essentiellement fonction du régime de rotation N(i) du moteur, on peut donc en déduire :

$$(3) \qquad Dell(i) = g(N(i))$$

où g est une fonction définie expérimentalement et intégrée sous forme de cartographie dans le système électronique.

Cette dernière formule suppose en première approximation la stabilité du régime de rotation durant la période considérée, ce qui est le cas compte tenu de l'inertie du moteur et de la durée considérée (de l'ordre de quelques points morts hauts).

La dérivée dPcoll(i) de la pression collelcteur est obtenue à partir de la dérivée dMcoll, entre deux points morts hauts, de la masse d'air frais Mcoll(i) présente dans le collecteur d'admission. En effet, par application des lois de la thermodynamique et de la dynamique des fluides, on montre que la pression de l'air dans le collecteur est directement liée à la masse d'air contenue dans ce dernier :

$$Mcoll(i) = \frac{Pcoll(i) * Vcoll(i)}{R * Tcoll}$$

on peut donc en déduire la formule suivante :

$$(4) \qquad DPcoll(i) = L(i) * Mcoll(i)$$

où L(i) représente un facteur variable en fonction de divers paramètres et notamment de la température Tcoll et du volume du collecteur Vcoll, et d'une constante caractéristique de l'air R.

La formule (4) permet donc d'établir le lien entre la dérivée dPcoll(i) de la pression collecteur et la dérivée dMcoll(i) de la masse d'air frais présente dans le collecteur d'admission :

$$dPcoll(i) = L(i) * dMcoll(i)$$

La dérivée dMcoll(i) de la masse d'air Mcoll(i) entre deux points morts hauts est obtenue en utilisant l'équation de la conservation de la masse, comme la différence entre la masse d'air entrant dans le collecteur Mpap(i) et la masse d'air entrant dans le moteur Mmot (i) pendant l'intervalle séparant les deux points morts

hauts considérés :

(5)  dMcoll(i) = Mpap(i) - Mmot (i)

2. Détermination du coefficient correctif K

En ce qui concerne le coefficient correctif K, celui-ci est un facteur multiplicatif fonction de la variable DP précédemment définie et de la température du carburant fournie par un capteur de température si la rampe d'injecteur en est équipé.

Ce facteur K représente la loi physique de BARRE SAINT VENANT, c'est-à-dire qu'il représente une valeur proportionnelle au rapport $DP/\sqrt{T}$, où T représente la température du carburant.

En fait, cette température n'est utilisée que dans le cas où le carburant est gazeux. Dans le cas d'un carburant à l'état liquide, l'influence de la température est du second ordre et on peut, en première approximation, considérer que le coefficient correctif K est simplement proportionnel à la différence de pression.

Là encore, d'une façon analogue à ce qui a été écrit pour le terme auxiliaire correctif, ce facteur multiplicatif peut être déterminé par des essais de façon à stocker des valeurs dans une table puis procéder ensuite à une interpolation linéaire. Ainsi, en ce qui concerne les valeurs cartographiques mémorisées dans la mémoire du calculateur, on détermine pour des conditions nominales une valeur de débit massique en sortie de l'injecteur puis on détermine pour des valeurs particulières de la variable DP, et éventuellement de la température amont, les valeurs de K permettant de conserver constante la valeur dudit débit massique.

L'invention permet donc d'adapter la formule du temps d'injection utilisée dans un logiciel de contrôle moteur à essence pour une utilisation sur un véhicule fonctionnant au gaz naturel ou au gaz de pétrole liquéfié.

**Revendications**

**1.**  Procédé de contrôle de l'injection dans un moteur à combustion interne et allumage commandé alimenté par du carburant gazeux liquéfié dans lequel on détermine la durée d'injection par la somme d'un premier terme de durée et d'un deuxième terme de durée égal au produit d'un coefficient correctif par le débit d'air aspiré par le moteur en un cycle moteur, **caractérisé par le fait que** le premier terme de durée est égal à la somme d'un terme principal dépendant de la tension d'alimentation électrique des injecteurs et d'un terme auxiliaire correctif dépendant de la tension d'alimentation électrique des injecteurs et de la différence de pression du carburant entre l'amont et le nez des injecteurs, et **par le fait que** le coefficient correctif est proportionnel à la ladite différence de pression.

**2.**  Procédé selon la revendication 1, **caractérisé par le fait qu'**on mesure la pression en amont des injecteurs à l'aide d'un capteur disposé dans le collecteur d'admission et on détermine la pression au nez d'un injecteur à partir de cette pression mesurée et de la durée séparant l'instant de la mesure de cette pression amont et l'instant de fermeture de la soupape d'admission.

**3.**  Procédé de contrôle de l'injection dans un moteur à combustion interne et allumage commandé alimenté par un carburant gazeux sous des conditions soniques, dans lequel on détermine la durée d'injection par la somme d'un premier terme de durée et d'un deuxième terme de durée égal au produit d'un coefficient correctif par le débit d'air aspiré par le moteur en un cycle moteur, **caractérisé par le fait que** le premier terme de durée est égal à la somme d'un terme principal dépendant de la tension d'alimentation électrique des injecteurs et d'un terme auxiliaire correctif dépendant de la tension d'alimentation électrique des injecteurs et de la pression du carburant en amont des injecteurs, et **par le fait que** le coefficient correctif est proportionnel au rapport entre ladite pression du carburant en amont des injecteurs et la racine carrée de la température dans le collecteur d'admission en amont des injecteurs.

**Patentansprüche**

**1.**  Verfahren zur Steuerung der Einspritzung in einem Verbrennungsmotor und mit gesteuerter Zündung, welcher mit gasförmigem, verflüssigtem Kraftstoff versorgt wird, bei welchem man die Einspritzdauer durch die Summe eines ersten Zeit-Terms und eines zweiten Zeit-Terms, der gleich dem Produkt eines Korrekturkoeffizienten mal dem Luftdurchsatz ist, welcher durch den Motor in einem Motorzyklus angesaugt wird, bestimmt, **dadurch gekennzeichnet, dass** der erste Zeit-Term gleich der Summe eines Haupt-Terms ist, welcher von der elektrischen Versorgungsspannung der Einspritzdüsen abhängt und eines hilfsweisen Korrektur-Terms, welcher von der elektrischen Versorgungsspannung der Einspritzdüsen und dem Druckunterschied des Kraftstoffs zwischen dem Oberteil und dem Vorderteil der Einspritzdüsen abhängt und dadurch, dass der Korrekturkoeffizient proportional zu dem Druckunterschied ist.

**2.**  Verfahren gemäß Anspruch 1, **dadurch gekennzeichnet, dass** man den Druck stromaufwärts der Einspritzdüsen mit Hilfe eines Sensors misst, welcher in dem Ansaugkrümmer angeordnet ist und man den Druck an dem Vorderteil einer Einspritzdüse ausgehend von diesem gemessenen Druck bestimmt und von der Dauer, welche den Moment der Messung dieses Drucks stromaufwärts und des Schließmoments des Einlassventils trennt.

3.  Verfahren zur Steuerung der Einspritzung in einem Verbrennungsmotor und mit gesteuerter Zündung, welcher mit einem gasförmigen Kraftstoff unter Schallbedingungen versorgt wird, bei welchem man die Einspritzdauer durch die Summe eines ersten Zeit-Terms und eines zweiten Zeit-Terms, gleich dem Produkt eines Korrekturkoeffizienten mal dem Durchsatz von Luft, die von dem Motor in einem Motorzyklus angesaugt wird, bestimmt, **dadurch gekennzeichnet, dass** der erste Zeit-Term gleich der Summe eines Haupt-Terms ist, welcher von der elektrischen Versorgungsspannung der Einspritzdüsen abhängt und eines hilfsweisen Korrektur-Terms, welcher von der elektrischen Versorgungsspannung der Einspritzdüsen und dem Kraftstoffdruck stromaufwärts der Einspritzdüsen abhängt und dadurch, dass der Korrekturkoeffizient proportional zum Verhältnis zwischen dem Kraftstoffdruck stromaufwärts der Einspritzdüsen und der Quadratwurzel der Temperatur in dem Ansaugkrümmer stromaufwärts der Einspritzdüsen ist.

## Claims

1.  A method of controlling injection into a controlled-ignition internal combustion engine fed by liquefied gaseous fuel in which the injection duration is determined by the sum of a first duration term and a second duration term equal to the product of a corrective coefficient by the air flow drawn in by the engine in an engine cycle, **characterised in that** the first duration term is equal to the sum of a main term dependent on the electrical supply voltage of the injectors and an auxiliary corrective term dependent on the electrical supply voltage of the injectors and the difference in pressure of the fuel between the upstream side and the nose of the injectors, and that the corrective coefficient is proportional to said pressure difference.

2.  A method according to claim 1 **characterised in that** the pressure upstream of the injectors is measured by means of a sensor disposed in the induction manifold and the pressure at the nose of an injector is determined from said measured pressure and the duration separating the time of measurement of said upstream pressure and the time of closure of the inlet valve.

3.  A method of controlling injection into a controlled-ignition internal combustion engine fed by a fuel which is gaseous under sonic conditions in which the injection duration is determined by the sum of a first duration term and a second duration term equal to the product of a corrective coefficient by the air flow drawn in by the engine in an engine cycle, **characterised in that** the first duration term is equal to the sum of a main term dependent on the electrical supply voltage of the injectors and an auxiliary corrective term dependent on the electrical supply voltage of the injectors and the pressure of the fuel upstream of the injectors, and that the corrective coefficient is proportional to the ratio between said pressure of the fuel upstream of the injectors and the square root of the temperature in the induction manifold upstream of the injectors.